# EUROPEAN PATENT SPECIFICATION

(11) **EP 2 508 555 B1**
(45) Date of publication and mention of the grant of the patent: **13.05.2015**
(21) Application number: 11159037.8
(22) Date of filing: 21.03.2011
(51) Int. Cl.: C08J 9/18, B29C 44/44, B29C 44/54

(54) **Process for producing pre-expandable plastic beads and beads obtainable according to said process**
Verfahren zur Herstellung vorexpandierbarer Kunststoffkügelchen und anhand dieses Verfahrens herstellbare Kügelchen
Procédé de production de billes plastiques pré-expansibles et billes pouvant être obtenues grâce à ce procédé

(43) Date of publication of application: 10.10.2012
(73) Proprietor: Electrolux Home Products Corporation N.V., 1130 Brussels (BE)
(72) Inventor: Sanita', Massimo, 33080 Porcia (PN) (IT); Bortolotti, Paolo, 33080 Porcia (PN) (IT); Badali, Marco, 33080 Porcia (PN) (IT)
(74) Representative: Nardoni, Andrea

(56) References cited:
- EP-A1- 2 159 030
- US-A- 3 436 446
- US-A1- 2008 190 924

## Description

### FIELD OF THE INVENTION

**.** The present invention relates to a process for producing pre-expandable plastic beads adapted to be used in an injection-molding process for the manufacture of plastic components of devices or machines. The invention also refers to pre-expandable plastic beads obtainable according to said process. The pre-expandable plastic beads are particularly suitable for the production of injection molded plastic components of household appliances as washing machines, dryers, dishwashers, refrigerators.

### BACKGROUND OF THE INVENTION

**.** Injection molded components are widely used in several different field of techniques. A particular kind of such components is represented by foamed injection molded components, which are made by a plastic base combined with blowing agents and, optionally, other additives, fillers, dyes. The presence of blowing agents allows obtaining the typical foamed structure. In fact, as well know to the skilled person, upon reaching a specific temperature during an injection-mold process, a foaming agent decomposes producing gas and, consequently, the foamed structure inside the plastic component. The use of foaming agents in the injection molding technology has the advantages that the final product is lighter and it is needed less plastic base to produce the component, so that it is also beneficial from an economic point of view. Further, foamed plastic components are low in heat conductivity due to the closed-cell structure. This characteristic is relevant especially when the components are to be used as thermal insulators. In addition, they are widely used to reduce sink marks and warpage.

. In general, a process for producing such kind of foamed in-mould plastic components comprises a preliminary step of preparation of the raw materials. The raw materials are normally divided into one group comprising a thermoplastic resin usually blended with fillers and potentially additives and dyes, and a second group comprising at least one blowing agent potentially blended with a polymer binder. These two groups are separately prepared in corresponding compounding lines and then are fed into a hopper of an injection molding machine in proper ratios in order to obtain a specific mixture which has to be injection-molded for producing the desired plastic component with selected characteristics. In fact, as it is well know, basically the composition of the mixture provides the chemical/physic characteristics of said components.

. In particular, the mixing of the thermoplastic resin and the blowing agent into the hopper of the injection-mold machine is a very crucial step since the quality of the injection-molded components depends on the correct ratio between the mixed materials, an on the uniformity of the mixture. Often, said mixture can easily be non uniform, because the two materials composing the mixture may concentrate in some region of the hopper. The result is that the final product, i.e. compound, can carry structural defects. Moreover, the dosage of the two basic substances is quite complicated and requires expertise and costly operation controls.

. Therefore, to solve the problem of non uniform mixing and right dosage of the raw materials to avoid complicated and costly operations of preparations of said materials, it would be desirable to prepare the mixture directly into the compounding line.

. In summary, in a compounding line for the preparation of thermoplastic resins beads, raw materials as a thermoplastic resin like polypropylene in the form of granules or powder are mixed with fillers as calcium carbonate and optionally also other additives. The mixture is extruded at high temperature, so as to obtain a homogeneous extrusion which is cooled and subsequently cut into granules. Thus, it would be advantageous to introduce also blowing agents with other optional additives and dyes in said mixture, so as to obtain a final product ready to be expanded in an injection-molding process.

. However, it is know that thermoplastic resins as polypropylene have a melt temperature higher than the decomposition temperature of the blowing agents. Accordingly, it is not possible to add blowing agents directly in the compounding line for producing extruded thermoplastic resins. In fact, if they are added in the compounding line, they decompose so that they are not any more useful in the injection-mold process.

### SUMMARY OF THE INVENTION

. The technical problem faced in the present invention is thus obtaining a method which ensures obtaining the correct ratio between one or more thermoplastic resins and one or more foaming agent, without the need of complicated dry blending operation.

. Said problem is solved by a process for producing pre-expandable plastic beads wherein one or more blowing agents are added to thermoplastic resin beads in the compounding line avoiding their early decomposition.

. Therefore, a first aspect of the present invention is a process for producing pre-expandable plastic beads.

. A further aspect of the invention is pre-expandable plastic beads obtainable according to the above process.

. A still further aspect is a process for the manufacture of a plastic component wherein the pre-expandable plastic beads as above are used.

. A still further aspect is a plastic component obtainable with the above process for the manufacture of plastic components.

. A still further aspect of the invention is a household appliance comprising components obtainable according to the above process.

. Further characteristics and the advantages of the process for producing pre-expandable plastic beads will become more evident in view of the following detailed description of some embodiments given by way of a non limitative examples of the invention.

### DETAILED DESCRIPTION OF THE INVENTION

. According to the process of the present invention, the mixing step between the base plastic component and the blowing agent has been advantageously carried out as a coating step, instead as a dry blending step. In this manner, it has been observed that the addition of the blowing agent can be easily performed as a final step in the compounding line of the plastic base avoiding the risk of early decomposition of the blowing agent itself.

. The coating, as will be explained later on, can be carried out in different ways after the plastic base beads have been prepared according to well know technologies. In general, plastic base beads are obtained by a method comprising hot melting of thermoplastic raw substances into and extruder in order to obtain a thread. Preferably, said substances are in form of a powder or pellets and are blended with fillers, additives, reinforcing agents or fibers and/or dyes. Afterwards, the thread is cut into pellets to be ready for the subsequent treatment steps. Pellets prepared as summarized are generally defined as raw thermoplastic materials to be used in an injection-mould for producing thermoplastic components.

**.** According to the invention, said thermoplastic materials in the form of pellets have been processed to obtain pre-expandable plastic beads ready to be fed into an injection-mold for producing thermoplastic components. In the present description, the term "pre-expandable" means that the corresponding beads already comprise the property to foam in order to expand. In other words, the beads do not need to be added or mixed with foaming agents to acquire the expanding or foaming property.

. In order to reach said property, the processing for producing pre-expandable plastic beads comprises the step of:
a) providing plastic pellets adapted to be fed into an injection-mould machine for carrying out an injection-molding of a foamed plastic component;
b) preparing a liquid solution comprising at least one blowing agent and a binder;
c) coating said beads with a film of said liquid solution;
d) letting said film to solidify onto said beads.

. Preferably, but not necessarily, the thickness of the film is comprised between 1 µm to 500 µm; this range is particularly advantageous, since it allows obtaining a sufficient amount of blowing agent, without increasing too much the external dimensions and the cost of the pre-expandable plastic beads.

. Advantageously, the step a) of providing plastic pellets may be carried out performing any conventional method of preparation well know to the skilled person in the art. Therefore, no specific disclosure will be made hereinafter. However, the raw base material used to manufacture said pellets is advantageously a thermoplastic or thermosetting resin, preferably a crystalline thermoplastic resin. Among the thermosetting and thermoplastic resins the most commonly used are epoxy, polypropylene, polyester, vinylester, phenolic, silicone and polyamide resins. The most commonly used thermoplastic resins are polyamide and polypropylene polymers. Preferred plastics are polyamide 66 (PA66, CAS Nr. 32131-17-2), polyamide 46 (PA46, CAS Nr. 50327-22-5), polyethylene terephthalate (PET CAS Nr. 25038-59-9), syndiotactic polystyrene (sPS, CAS Nr. 28325-75-9).

. Preferred crystalline thermoplastic resins comprise polypropylene-based polymers, polybutene-based polymers, polymethylpentene-based polymers, polyester-based polymers, polyamide-based polymers, fluorine-based polymers, crystalline styrene-based polymers. More preferably, the resins are propylene homopolymers and random or block copolymenrs of propylene and other α-olefins, as for instance high density polyetilene (HDPE), acrylic resins as acrylonitrile butadiene styrene (ABS), high impact polystyrene (HIPS), polyvinyl chloride (PVC). The grains obtained have usually an average diameter ranging between 1 mm and 20 mm, preferably between 2 mm and 6 mm.

. The step b) of preparing a liquid solution advantageously comprises dissolving at least one blowing agent in a binder selected from a water polymer emulsion or water dispersion polymers or molten waxes.

. When polymers are selected, they advantageously include emulsion polymers and other types of water dispersible polymers. Suitable polymers include acrylics, vinyls (including but not limited to styrenics, polyvinyl alcohols, and polyvinyl acetates), acrylic/vinyls, polyurethanes, polyamides, polyesters, polyethylene glycols, styrene-butadiene-rubber (SBR) polymers, nitrocelluloses, hybrids thereof, or blends thereof. Hybrid polymers are compositions containing more than one type of polymer and are made by sequential polymerization of one polymer in the presence of another. Hybrid polymers can include copolymers wherein the preparation of the second polymer in the presence of the first polymer results in the formation of copolymer. Vinyl/acrylic emulsion polymers such as styrene/acrylic emulsion polymers are preferred. Examples of said polymers are polyvinyl acetate (PVAC, CAS No. 9003-20-7), polyvinyl alcohol (PVOH, CAS No. 9002-89-5), acrylic copolymer. Natural polymers are also contemplated for use in the present invention and include proteins, (hydroxyethyl)cellulose, cotton, starch and the like, as for instance polysaccharides as matodextrin. The dry weight of said polymers may be adjusted according to the application and can be selected between 30% to 90% as weight fraction [phc] (parts per hundred of composition) of the dried coating, preferably between 30% and 70%, more preferably between 40% and 60%.

. The preparation of polymer emulsion and water-borne polymers is well known to those skilled in the art. For example, the preparation of emulsion polymers is described in Emulsion Polymerization by Gilbert, R. G., Academic Press, N.Y., 1995, pp 1-23. Other water-borne polymers suitable for use in the practice of the present invention include styrene/acrylic polymers made by a continuous process. The preparation of these types of polymers is described in U.S. Pat. Nos. 4,546,160; 4,414,370; and 4,529,787. Yet other types of water-borne polymers suitable for use as described herein include resin-supported emulsions prepared by aqueous phase polymerization in the presence of water-dispersible support resins. These polymers are described in U.S. Pat. Nos. 4,894,397; 4,839,413; and 4,820,762. Additional water-borne polymers suitable for use in the practice of the present invention are water-borne autoxidizable polymers such as those described in U.S. Pat. No. 5,422,394; U.S. Pat. No. 6,333,370; U.S. Pat. No. 6,555,625; U.S. Pat. No. 4,312,797; and U.S. Pat. No. 4,447,567.

. Generally such polymers are prepared with ethylenically unsaturated monomers, and initiators, and optionally with surfactants, alkali, and water or another reaction solvent. Exemplary monomers include but are not limited to acrylic acid, methacrylic acid, itaconic acid, maleic acid, fumaric acid, crotonic acid, acrylic anhydride, methacrylic anhydride, itaconic anhydride, maleic anhydride, fumaric anhydride, crotonic anhydride, styrene, methyl styrene, alpha-methyl styrene, ethyl styrene, isopropyl styrene, tertiary-butyl styrene, ethyl methacrylate, methyl methacrylate, butyl acrylate, butyl methacrylate, 2-ethylhexyl acrylate, ethyl acrylate, vinyl acetate, methyl acrylate, acyclic conjugated dienes, 2-hydroxyethyl methacrylate, 2-hydroxyethyl acrylate, methylol acrylamide, glycidyl acrylate, glycidyl methacrylate, vinyl esters, vinyl chloride, and the like. Water-borne polymers suitable for use with the present invention include self-cross linkable polymers (see, e.g., U.S. Pat. Nos. 5,432,229; 5,605,722; 6,355,720; and 6,538,062). Self-cross linkable polymers comprise polymerized self-cross linkable monomers such as diacetone acrylamide (DAAM), acetoacetoxyethyl methacrylate, acetoacetoxyethyl acrylate, allyl acetoacetate, vinyl acetoacetate, acrolein, formyl-styrol, vinyl methyl ketone, vinyl ethyl ketone, vinyl butyl ketone, diacetone acrylate, acetonyl acrylate, diacetone methacrylate, 2-hydroxypropyl acrylate acetylacetate, butanediol-1,4-acrylate acetylacetate, allyl methacrylate.

. With reference to the molten waxes, it is to be noticed that any wax melting at a temperature below the typical blowing agents decomposition temperature are suitable. However, said molten waxes should consolidate at a sufficiently high temperature to allow the handling of the pre-expandable beads at the usual ambient condition.

. Waxes can preferably have a natural origin as plant leaves and fruits but also animals, algae, fungi and bacteria origins. Some waxes are also of mineral origin.

. The various materials named waxes do not form a chemically homogeneous group. All waxes are water-resistant materials made up of various substances including hydrocarbons (normal or branched alkanes and alkenes), ketones, diketones, primary and secondary alcohols, aldehydes, sterol esters, alkanoic acids, terpenes (squalene) and monoesters (wax esters), all with long or very long carbon chains (from 12 up to about 38 carbon atoms) and solid in a large range of temperature (fusion point between 60 and 100°C).

. More commonly, waxes are esters of an alcohol other than glycerol (long chain alcohol, sterol, hydroxycarotenoids, vitamin A) and a long chain acid (wax esters). Wax esters are saponified by hot alkaline solutions and give a fatty acid and an alcohol. They are soluble in aromatic solvents, chloroform, ethers, esters and ketones.

. Example of wax esters are: dodecyl hexadecanoate (lauryl palmitate), octadecyl octadecanoate (stearyl stearate), etc. The acid or the alcohol chain can be unsaturated.

. Among the animal waxes, been, wax, Chinese wax (insect wax), Shellac wax, Whale spermaceti, Lanolin can be used. Suitable vegetal waxes can be selected from Carnauba wax, Ouricouri wax, Jojoba wax, Candelilla wax, Esparto wax, Japan wax, Rice bran oil (CAS No. 8016-60-2). Suitable miner waxes are for instance Ozocerite wax, Montanic wax (CAS No. 73138-45-1, 8002-53-7).

. Synthetic waxes can also be used. They are made of ethylene glycol diesters or triesters of long-chain fatty acids (C18-C36). Their melting points range between 60-75°C and can be used to confer rigidity to sticks and to modify the product's crystallinity. Liquid branched chain esters, such as isopropyl myristate or cetostearyl ethylhexanoate, provide products with good spreading properties. Examples of such waxes are microcrystalline wax (CAS No. 63231-60-7), paraffin wax (CAS No. 8002-74-2), hard oxidized polyethylene wax (CAS No. 68441-17-8), ethylene vinyl acetate copolymer wax (CAS No. 24937-78-8), low density polyethylene wax (CAS No. 9002-88-4).

. The amount of such waxes can range between 30% and 90% as weight fraction [phc] of the dried coating, preferably between 30% and 70%, more preferably between 40% and 60%.

. The preparation step b) of the solution advantageously comprises also the addition of at least one blowing agent selected from endothermic and exothermic substances. Preferably, said substances can be selected from nitrogen-based compounds as azodicarbonamide (CAS No. 123-77-3), hydrazine-derivate compounds as 4-methylbenzene-sulfonohydrazine (CAS No. 344295-58-5) or toluenesulfonylsemicarbazide (CAS No. 10396-10-18), OBSH (P,P'-Oxybis Benzene Sulfonyl Hydrazide) (CAS No. 80-51-3), tetrazoles compounds as 5-phenyltetrazoles (1 H-tetrazole,5-phenyl) (CAS No. 18039-42-4), sodium bicarbonates (CAS No. 144-55-08), citric acid (CAS No. 77-92-9), tri sodium bihydrate citrate (1,2,3-propanetricarboxylic acid,2-hydroxy-,sodium salt,dehydrate) (CAS No. 6132-04-03).

. The blowing agent can be used in an amount ranging between 0-60% of weight fraction [phc] of the dried coating, preferably between 10-50%, more preferably between 30-50%. It can be used a single kind of blowing agent or a mixture of different kinds.

. In addition, the solution can comprise other additives conventionally used in the art such as antioxidants, fillers, dyes, reinforcing fibers, as for instance calcium carbonate, talcum, kaolin, barium sulfate, silica, glass fibers and/or basalt fibres.

. Once the liquid solution comprising at least one blowing agent and a binder has been prepared according to the above, the step c) of coating the thermoplastic resin beads obtained in step a) with a film of said liquid solution is carried out, preferably by sinking the thermoplastic resin beads or threads in a bath containing said solution or spraying the solution onto the beads.

. If the coating is performed sinking the beads or threads into a bath, the solution containing the polymer as a binder is prepared adding to a water dispersion polymer the water soluble CBAs in the wanted proportions or adding the CBAs to a molten wax. The amount of CBAs must be from 1% weight (dried) to 60% weight (dried). The mixture must be prepared at temperatures below the decomposition CBAs by stirring.

. Analogously, the solution containing the polymer prepared according to the above can be advantageously sprayed onto the beads of thread. The spraying coating can be performed according to any one of the known method to the skilled person. For instance, the beads can be charged into a fluidized-bed apparatus where particles are suspended in a fluidized bed while they are sprayed with the coating solution. An example of such a kind of fluidized bed is disclosed in the European Patent Application EP 2201998. In summary, the thermoplastic resin beads are introduced into a particle agitation chamber where a flow of carrying fluid to transport said beads inside said chamber is created. Said carrying fluid is accelerated inside a first zone of said particle agitation chamber where the liquid solution containing the polymer and the blowing agent is atomized or misted so that said beads are coated into said flow of said carrier fluid. The beads are recovered after atomizing in a second zone around said first zone of said particle agitation chamber where they are caused to enter again into said acceleration zone. In this manner a circle is created letting the beads to recycle again and again into the first coating zone to obtain a very careful control of the coating.

. It is to be noticed that the above summarized coating process in a fluidized bed can be carried out also spraying or atomizing a solution or mixture of waxes and at least a blowing agent. Similarly, a bath comprising at least one blowing agent suspended in waxes can be used to coat the beads according to the present invention.

. In addition, if the fluidized bed method is selected in conjunction of the use of waxes, the coating process can be totally carried out in the above apparatus. In fact, according to the above process, the molten waxes are sprayed onto the beads surface when they are still warm. However, immediately after the contact with the beads, the molten warm waxes solidify because they come into contact with colder surfaces. Moreover, after the accelerating zone, the beads are let to enter an expanding zone where they further cool down.

. Alternatively, if the beads or threads are sunk into the coating bath either with a polymer emulsion or a wax solution, a conventional cooling/evaporation step should be performed. For instance a mixture of sodium bicarbonate and citric acid may be dissolved in a PVA water emulsion which concentration is 40% of PVA in water; then the solution is sprayed on beads put on a grid, and then the beads are dried by a warm air stream for 30minutes.

. In view of the above, it is now evident that the drawbacks of the prior art have been solved and important advantages have been reached.

. First of all, pre-expandable beads can be prepared directly in the compounding line. Consequently, said beads are ready to be charged into a mould without auxiliary equipments necessary to dry blend the raw materials. At the same time, the problem related to the control of the dosage of each substance is completely avoided, because any single bead already comprises the exact quantities of thermoplastic material and of blowing agent.

. Pre-expandable compounds can further be shipped directly to the molders with different compositions connected to the technical specification of the final component to be produced. Therefore, a great logistic advantage is reached.

. The coating layer can contain any kind of additive necessary for the compound feature (antioxidant, fillers, dyes, etc.).

. Also, a better homogenization and dispersion of the additives then the conventional masterbatch solution can be easily obtained.

. It is to be noticed that the pre-expandable beads obtained according to the present invention are particularly suitable in an injection-mold process for manufacturing plastic components for household appliances, computers, technology instruments, and the like. Among the household appliances, the process is suitable for producing polypropylene made structural elements for laundry washing machines, tumble-dryers, dishwashers, refrigerators, as for instance tubs, drums, drawers, control panels, supporting frames, hoppers, lids, doors, filter casings, handles, detergent dispensers.

. In the following, some preferred embodiments are reported as non limiting examples to carry out the invention.

| **Tab.1: Examples of Coating Compositions: weight fraction % [phc]** | | |
|---|---|---|
| Binder (dried) | NaHCO₃ | C₆H₈O₅ |
| (water emulsion polymers) | | |
| 30 | 40 | 30 |
| 30 | 30 | 40 |
| 40 | 30 | 30 |
| 50 | 50 | 0 |
| 50 | 0 | 50 |
| 90 | 5 | 5 |

The binder (polymer in emulsion) is an emulsion at different viscosity: this means that the amount of polymer could be from 5% to 70% in water (water from 95% to 30%). The amounts of CBAs are added to obtain the wanted concentration in the dried mixture. The mixture is prepared at room temperature.

| **Tab.2: Examples of Coating Compositions: weight fraction % [phc]** | | |
|---|---|---|
| Binder | NaHCO₃ | C₆H₈O₅ |
| (wax) | | |
| 30 | 40 | 30 |
| 30 | 30 | 40 |
| 40 | 30 | 30 |
| 50 | 50 | 0 |
| 50 | 0 | 50 |
| 90 | 5 | 5 |

The binder (wax) is preliminary dried blended with the CBAs powders at room temperature, then the blend is molten at the wax melting temperature or little higher and stirred until to get a proper homogenization. The process temperature must be below the CBAs decomposition temperatures. The amounts of CBAs are added to obtain the wanted concentration in the dried mixture.

## Claims

1. Process for producing pre-expandable plastic beads comprising the step of:
a) providing plastic beads adapted to be fed into an injection-mould machine for carrying out an injection-mould of a foamed plastic component;
b) preparing a liquid solution comprising at least one blowing agent and a binder;
c) coating said beads with a film of said liquid solution
d) letting said film to solidify onto said beads.

2. Process according to claim 1, wherein said plastic beads of step a) comprises a thermoplastic or thermosetting resin.

3. Process according to claim 2, wherein said resin is selected from epoxy, polypropylene, polyester, vinylester, phenolic, silicone and polyamide resins.

4. Process according to claim 2 or 3, wherein said resin is a crystalline thermoplastic resin comprising at least one of the following materials: polypropylene-based polymers, polybutene-based polymers, polymethylpentene-based polymers, polyester-based polymers, polyamide- based polymers, fluorine-based polymers, crystalline styrene-based polymers, propylene homopolymers or random or block copolymers of propylene and other alpha-olefins, as high density polyethylene (HDPE), acrylic resins as acrylonitrile butadiene styrene (ABS), high impact polystyrene (HIPS), polyvinyl chloride (PVC).

5. Process according to any one of claims 1 to 4, wherein step b) comprises dissolving at least one blowing agent in a binder selected from a water polymer emulsion or molten waxes.

6. Process according to claim 5, wherein said binder is a polymer including at least one of the following materials: acrylics, vinyls including styrenics, polyvinyl alcohols, and polyvinyl acetates, acrylic/vinyls, polyurethanes, polyamides, polyesters, polyethylene glycols, styrene-butadiene-rubber (SBR) polymers, nitrocelluloses, or blends thereof.

7. Process according to claim 5, wherein said polymers are one of the following: polyvinyl acetate (PVAC, CAS No. 9003-20-7), polyvinyl alcohol (PVOH, CAS No. 9002-89-5), acrylic copolymer, natural polymers including proteins, (hydroxyethyl)cellulose, cotton, starch, and polysaccharides such as maltodextrin.

8. Process according to claim 5, wherein said waxes have a vegetal origin such as plant leaves and fruits, animal, algae, fungi or bacteria origin, and mineral origin, wherein all waxes include hydrocarbons (normal or branched alkanes and alkenes), ketones, diketones, primary and secondary alcohols, aldehydes, sterol esters, alkanoic acids, terpenes (squalene) and monoesters (wax esters), all with long or very long carbon chains (from 12 up to about 38 carbon atoms) and solid in a large range of temperature (fusion point between 60 and 100 OC).

9. Process according to claim 8, wherein said waxes are selected from the following waxes: been wax, Chinese wax (insect wax), Shellac wax, Whale spermaceti, Lanolin, Carnauba wax, Ouricouri wax, Jojoba wax, Candelilla wax, Esparto wax, Japan wax, Rice bran oil (CAS No. 8016-60-2), Ozocerite wax, Montanic wax (CAS No. 73138-45-1, 8002-53-7), ethylene glycol diesters or triesters of long-chain fatty acids (C18-C36), microcrystalline wax (CAS No. 63231-60-7), paraffin wax (CAS No. 8002-74-2), hard oxidized polyethylene wax (CAS No. 68441-17-8), ethylene vinyl acetate copolymer wax (CAS No. 24937-78-8), low density polyethylene wax (CAS No. 9002-88-4).

10. Process according to any one of claims from 1 to 9, wherein said blowing agent is selected from: nitrogen-based compounds such as azodicarbonamide (CAS No. 123-77-3), hydrazine-derivate compounds such as 4-methylbenzene-sulfonohydrazine (CAS No. 344295-58-5) or toluenesulfonylsemicarbazide (CAS No. 10396-10-18), OBSH (P,P'-Oxybis Benzene Sulfonyl Hydrazide) (CAS No. 80-51-3), tetrazoles compounds such as 5-phenyltetrazoles (1H-tetrazole,5-phenyl) (CAS No. 18039-42-4), sodium bicarbonates (CAS No. 144-55-08), citric acid (CAS No. 77-92-9), tri sodium bihydrate citrate (1,2,3-propanetricarboxylic acid,2-hydroxy-,sodium salt,dehydrate) (CAS No. 6132-04-03).

11. Process according to any one of claims 1 to 10, wherein the step c) is carried out by sinking the thermoplastic resin beads or threads in a bath containing said solution or spraying the solution onto the beads or threads.

12. Process according to claim 11, wherein said coating is carried out by spraying the solution onto said beads suspended in a fluidized bed.

13. Process according to claim 12, wherein said binder is present in an amount form 40% to 90% weight fraction of the dried coating, and said at least one blowing agent is present in an amount from 0% to 60% weight fraction of the dried coating.

14. Pre-expandable plastic beads obtainable according to the process of any one of claims 1 to 13.

15. Use of the pre-expandable plastic beads according to claim 14 for producing polypropylene made structural elements for laundry washing machines, tumble-dryers, dishwashers, refrigerators, such as tubs, drums, drawers, control panels, supporting frames, hoppers, lids, doors, filter casings, handles, detergent dispensers.

## Patentansprüche

1. Verfahren zum Erzeugen von vorexpandierbaren Kunststoffkugeln, das die folgenden Schritte beinhaltet:
a) Bereitstellen von Kunststoffkugeln, die in eine Spritzformmaschine gespeist werden können, um eine geschäumte Kunststoffkomponente spritzzugießen;
b) Herstellen einer flüssigen Lösung, die wenigstens ein Blasmittel und ein Bindemittel beinhaltet;
c) Beschichten der genannten Kugeln mit einem Film der genannten flüssigen Lösung;
d) Erhärtenlassen der genannten Folie auf den genannten Kugeln.

2. Verfahren nach Anspruch 1, wobei die genannten Kunststoffkugeln von Schritt a) ein thermoplastisches oder duroplastisches Harz beinhalten.

3. Verfahren nach Anspruch 2, wobei das genannte Harz aus Epoxid-, Polypropylen-, Polyester-, Vinylester-, Phenol-, Silicon- und Polyamidharzen ausgewählt ist.

4. Verfahren nach Anspruch 2 oder 3, wobei das genannte Harz ein kristallines thermoplastisches Harz ist, das wenigstens eines der folgenden Materialien beinhaltet: Polymere auf Polypropylenbasis, Polymere auf Polybutenbasis, Polymere auf Polymethylpentenbasis, Polymere auf Polyesterbasis, Polymere auf Polyamidbasis, Polymere auf Fluorbasis, Polymere auf der Basis von kristallinem Styrol, Polypropylenhomopolymere oder Random- oder Blockcopolymere von Propylen und anderen Alpha-Olefinen, sowie hochdichtes Polyethylen (HDPE), Acrylharze wie Acrylnitril-Butadien-Styrol (ABS), schlagfestes Polystyrol (HIPS), Polyvinylchlorid (PVC).

5. Verfahren nach einem der Ansprüche 1 bis 4, wobei Schritt b) das Auflösen von wenigstens einem Blasmittel in einem Bindemittel beinhaltet, das aus einer Wasser-Polymer-Emulsion oder geschmolzenen Wachsen ausgewählt ist.

6. Verfahren nach Anspruch 5, wobei das genannte Bindemittel ein Polymer ist, das wenigstens eines der folgenden Materialien beinhaltet: Acryle, Vinyle inklusive Styrole, Polyvinylalkohole und Polyvinylacetate, Acryl/Vinyle, Polyurethane, Polyamide, Polyester, Polyethylenglykole, Styrol-Butadien-Kautschuk-(SBR)-Polymere, Nitrocellulosen oder Mischungen davon.

7. Verfahren nach Anspruch 5, wobei die genannten Polymere eines der Folgenden sind: Polyvinylacetat (PVAC, CAS Nr. 9003-20-7), Polyvinylalkohol (PVOH, CAS Nr. 9002-89-5), Acrylcopolymer, natürliche Polymere inklusive Proteine, (Hydroxyethyl)cellulose, Baumwolle, Stärke und Polysaccharide wie Maltodextrin.

8. Verfahren nach Anspruch 5, wobei die genannten Wachse pflanzlichen Ursprungs sind, wie beispielsweise von Pflanzenblättern und -früchten, tierischen, Algen-, Pilz-oder Bakterienursprungs, Mineralursprungs, wobei alle Wachse Kohlenwasserstoffe (normale oder verzweigte Alkane und Alkene), Ketone, Diketone, primäre und sekundäre Alkohole, Aldehyde, Sterolester, Alkansäuren, Terpene (Squalene) und Monoester (Wachsester) beinhalten, alle mit langen oder sehr langen Kohlenstoffketten (von 12 bis zu etwa 38 Kohlenstoffatomen), und fest in einem großen Temperaturbereich (Schmelzpunkt zwischen 60 und 100°C).

9. Verfahren nach Anspruch 8, wobei die genannten Wachse aus den folgenden Wachsen ausgewählt sind: Bienenwachs, chinesiches Wachs (Insektenwachs), Shellac-Wachs, Walspermazetwachs, Lanolin, Carnauba-Wachs, Ouricouri-Wachs, Jojoba-Wachs, Candelilla-Wachs, Esparto-Wachs, Japanwachs, Reiskeimöl (CAS Nr. 8016-60-2), Ozocerit-Wachs, Montanwachs (CAS Nr. 73138-45-1, 8002-53-7), Ethylenglykol-Diester oder -Triester von langkettigen Fettsäuren (C18-C36), mikrokristallines Wachs (CAS Nr. 63231-60-7), Paraffinwachs (CAS Nr. 8002-74-2), hartes oxidiertes Polyethylenwachs (CAS Nr. 68441-17-8), Ethylen-Vinylacetat-Copolymer-Wachs (CAS Nr. 24937-78-8), Polyethylenwachs niedriger Dichte (CAS Nr. 9002-88-4).

10. Verfahren nach einem der Ansprüche 1 bis 9, wobei das genannte Blasmittel ausgewählt ist aus: Verbindungen auf Stickstoffbasis wie Azodicarbonamid (CAS Nr. 123-77-3), Hydrazin-Derivat-Verbindungen wie 4-Methylbenzol-sulfonhydrazin (CAS Nr. 344295-58-5) oder Toluolsulfonylsemicarbazid (CAS Nr. 10396-10-18), OBSH (P,P'-Oxybis-benzol-sulfonylhydrazid) (CAS Nr. 80-51-3), Tetrazolverbindungen wie 5-Phenyltetrazole (1H-Tetrazol,5-phenyl) (CAS Nr. 18039-42-4), Natriumbicarbonate (CAS Nr. 144-55-08), Zitronensäure (CAS Nr. 77-92-9), Trinatriumbihydratzitrat (1,2,3-Propantricarbonsäure, 2-Hydroxy-, Natriumsalz, Dehydrat) (CAS Nr. 6132-04-03).

11. Verfahren nach einem der Ansprüche 1 bis 10, wobei Schritt c) durch Eintauchen der thermoplastischen Harzkugeln oder -fäden in ein die genannte Lösung enthaltendes Bad oder Aufsprühen der Lösung auf die Kugeln oder Fäden ausgeführt wird.

12. Verfahren nach Anspruch 11, wobei die genannte Beschichtung durch Aufsprühen der Lösung auf die genannten in einer Wirbelschicht suspendierten Kugeln erfolgt.

13. Verfahren nach Anspruch 12, wobei das genannte Bindemittel in einer Menge von 40% bis 90% Gewichtsanteil der getrockneten Beschichtung vorliegt, und das genannte wenigstens eine Blasmittel in einer Menge von 0% bis 60% Gewichtsanteil der getrockneten Beschichtung vorliegt.

14. Vorexpandierbare Kunststoffkugeln, die mit dem Verfahren nach einem der Ansprüche 1 bis 13 erhältlich sind.

15. Verwendung der vorexpandierbaren Kunststoffkugeln nach Anspruch 14 zur Herstellung von mit Polypropylen hergestellten Strukturelementen für Waschmaschinen, Wäschetrockner, Geschirrspülmaschinen, Kühlschränke, wie Wannen, Trommeln, Schubladen, Bedienfelder, Tragrahmen, Trichter, Decken, Türen, Filtergehäuse, Griffe, Waschrnittelspender.

## Revendications

1. Procédé de production de billes préexpansibles en plastique, comprenant les étapes suivantes :
a) utiliser des billes en plastique conçues pour être introduites dans une machine de moulage par injection pour élaborer un moule d'injection d'un composant en mousse de matière plastique ;
b) préparer une solution liquide comprenant au moins un agent de soufflage et un liant ;
c) enduire lesdites billes d'un film de ladite solution liquide ;
d) laisser ledit film se solidifier sur lesdites billes.

2. Procédé selon la revendication 1, dans lequel lesdites billes en plastique de l'étape a) comprennent une résine thermoplastique ou thermodurcissable.

3. Procédé selon la revendication 2, dans lequel ladite résine est choisie parmi les résines époxy, les polypropylènes, les polyesters, les esters de vinyle, les résines phénoliques, de silicone et de polyamide.

4. Procédé selon la revendication 2 ou 3, dans lequel ladite résine est une résine thermoplastique cristalline comprenant au moins l'une des matières suivantes : des polymères à base de polypropylène, des polymères à base de polybutène, des polymères à base de polyméthylpentène, des polymères à base de polyester, des polymères à base de polyamide, des polymères à base de fluor, des polymères à base de styrène cristallin, des homopolymères de propylène ou des copolymères statistiques ou en blocs de propylène et d'autres alpha-oléfines, telles que le polyéthylène haute densité (HDPE), les résines acryliques telles que l'acrylonitrile butadiène styrène (ABS), le polystyrène à haute résistances aux chocs (HIPS), le polychlorure de vinyle (PVC).

5. Procédé selon l'une quelconque des revendications 1 à 4, dans lequel l'étape b) comprend la dissolution d'au moins un agent de soufflage dans un liant choisi parmi une émulsion de polymère dans l'eau ou des cires fondues.

6. Procédé selon la revendication 5, dans lequel ledit liant est un polymère comprenant au moins l'une des substances suivantes : des polymères acryliques, vinyles y compris styréniques, des alcools polyvinyliques et des polyacétates de vinyle, des composés acryliques/vinyles, des polyuréthanes, des polyamides, des polyesters, des polyéthylène glycols, des polymères caoutchoucs styrène-butadiène (SBR), des nitrocelluloses ou leurs mélanges.

7. Procédé selon la revendication 5, dans lequel lesdits polymères sont un composé parmi ceux qui suivent : polyacétate de vinyle (PVAC, CAS n°9003-20-7), alcool polyvinylique (PVOH, CAS n°9002-89-5), copolymère acrylique, polymères naturels comprenant des protéines, hydroxyéthylcellulose, coton, amidon et des polysaccharides tels que la maltodextrine.

8. Procédé selon la revendication 5, dans lequel lesdites cires ont une origine végétale, telles que des feuilles de plante et des fruits, animale, proviennent d'algues, de champignons ou de bactéries ou une origine minérale, l'ensemble des cires comprenant des hydrocarbures (alcanes et alcènes normaux ou ramifiés), des cétones, des dicétones, des alcools primaires et secondaires, des aldéhydes, des esters de stérols, des acides alcanoïques, des terpènes (squalène) et des mono-esters (esters de cires), l'ensemble étant doté de longues voire très longues chaînes de carbone (de 12 à environ 38 atomes de carbone) et étant solide dans une grande plage de température (point de fusion compris entre 60 et 100°C).

9. Procédé selon la revendication 8, dans lequel lesdites cires sont choisies parmi les cires suivantes : cire d'abeille, cire chinoise (cire d'insectes), cire de gomme-laque, spermacétis de baleine, lanoline, cire de carnauba, cire d'ouricouri, cire de jojoba, cire de candelilla, cire de Sparte, cire du Japon, huile de son de riz (CAS n°8016-60-2), cire d'ozocérite, cire montanique (CAS n°73138-45-1, 8002-53-7), diesters ou triesters d'éthylène glycol et d'acides gras à longue chaîne (C₁₈-C₃₆), cire microcristalline (CAS n°63231-60-7), cire de paraffine (CAS n°8002-74-2), cire de polyéthylène oxydé dur (CAS n°68441-17-8), cire de copolymère d'acétate de vinyle et d'éthylène (CAS n°24937-78-8), cire de polyéthylène basse densité (CAS n°9002-88-4).

10. Procédé selon l'une quelconque des revendications 1 à 9, dans lequel ledit agent de soufflage est choisi parmi : les composés à base d'azote tels que l'azodicarbonamide (CAS n°123-77-3), les composés dérivés de l'hydrazine tels que la 4-méthylbenzène-sulfonohydrazine (CAS n°344295-58-5) ou le toluènesulfonylsemicarbazide (CAS n°10396-10-18), l'OBSH (P,P'-oxybis benzène sulfonyl hydrazide) (CAS n°80-51-3), les composés de tétrazole tels que les 5-phényltétrazoles (1H-tétrazole,5-phényl) (CAS n°18039-42-4), les bicarbonates de sodium (CAS n°144-55-08), l'acide citrique (CAS n°77-92-9), le bihydrate citrate de trisodium (sel de sodium de l'acide 2-hydroxy-1,2,3-propanetricarboxylique déshydraté) (CAS n°6132-04-03).

11. Procédé selon l'une quelconque des revendications 1 à 10, dans lequel l'étape c) se fait par plongée des perles ou des fils de résine thermoplastique dans un bain contenant ladite solution ou par pulvérisation de la solution sur les perles ou sur les fils.

12. Procédé selon la revendication 11, dans lequel ladite enduction a lieu par pulvérisation de la solution sur lesdites perles en suspension dans un lit fluidisé.

13. Procédé selon la revendication 12, dans lequel ledit liant est présent en une quantité allant de 40 à 90 % de fraction pondérale du revêtement séché, et où ledit au moins un agent de soufflage est présent en une quantité allant de 0 à 60 % de fraction pondérale du revêtement séché.

14. Billes préexpansibles en plastique selon le procédé de l'une quelconque des revendications 1 à 13.

15. Emploi des billes préexpansibles en plastique selon la revendication 14 pour produire des éléments de structure en polypropylène pour des lave-linge, des sèche-linge, des lave-vaisselle, des réfrigérateurs tels que des cuves, des tambours, des tiroirs, des tableaux de commande, des cadres de soutien, des trémies, des couvercles, des portes, des carters de filtres, des poignées, des distributeurs de détergent.
